# EUROPEAN PATENT APPLICATION

(11) **EP 2 806 389 A1**
(43) Date of publication of application: **26.11.2014**
(21) Application number: 12890776.3
(22) Date of filing: 28.12.2012
(51) Int. Cl.: G06Q 30/02

(54) **INFORMATION PROVIDING SYSTEM, INFORMATION PROVIDING METHOD, PROGRAM, AND RECORDING MEDIUM**

(71) Applicant: Rakuten, Inc., Tokyo 140-0002 (JP)
(72) Inventor: SAGARA, Miho, Tokyo 140-0002 (JP); SHINODA, Yukiko, Tokyo 140-0002 (JP)
(74) Representative: EIP
(86) International application number: PCT/JP2012/084181
(87) International publication number: WO 2014/103050

(57) **Abstract**

An information providing system for providing a user with information about at least one product or service corresponding to a new need due to a change in an attribute of the user by the user is provided. A receiving section (20) receives a request for changing a value of an attribute of the user. A user attribute changing section (22) changes the value of the attribute in response to the request. A recommendation target specifying section (24) specifies the at least one product or service to be recommended to the user based on at least one of the value of the attribute before the value is changed and the value of the attribute after the value is changed. An information providing section (28) provides the user with information about the at least one product or service specified by the recommendation target specifying section (24).

## Description

### Technical Field

The present invention relates to an information providing system, an information providing method, a program, and a storage medium.

### Background Art

For a service to provide information relating to a product or a service using a website, there has been a technology for providing a user with information about a product or a service similar to a product or a service that the user has purchased based on the user's purchase history, or a technology for providing a user with information about a product or a service similar to a product or a service that the user has browsed based on the user's browsing history. Patent Literature 1 describes a technology for providing a user with information about a product or the like that has been purchased by a person who has a similarity to the user about time-dependent change in a purchase history or conditions for searching products.

### Citation List

### Patent Document

Patent Literature 1: JP2009-026304A

### Summary of Invention

### Technical Problem

In the conventional technology, it is possible to provide a user with information about a product or a service similar to a product or a service that the user has purchased, or information about a product or a service similar to a product or a service that the user has browsed, or information about a product or a service that has been purchased by a person who has a similarity to the user about time-dependent change in a purchase history or conditions for searching products. However, the conventional technology may not provide the user with information relating to a product or a service corresponding to a new need due to a change in an attribute of the user, such as a change in personal information of the user, by the user.

One or more embodiments of the present invention have been conceived in view of the above, and an object thereof is to provide an information providing system for providing a user with information relating to at least one product or service corresponding to a new need due to a change in an attribute of the user by the user.

### Solution to Problem

In order to solve the above described problems, an information providing system according to the present invention includes receiving means for receiving a request for changing a value of an attribute of a user, changing means for changing the value of the attribute in response to the request for changing the value of the attribute, specifying means for specifying at least one product or service to be recommended to the user based on at least one of the value of the attribute before the value is changed and the value of the attribute after the value is changed, and providing means for providing the user with information about the at least one product or service specified by the specifying means.

An information providing method according to the present invention includes the steps of receiving a request for changing a value of an attribute of a user, changing the value of the attribute in response to the request for changing the value of the attribute, specifying at least one product or service to be recommended to the user based on at least one of the value of the attribute before the value is changed and the value of the attribute after the value is changed, and providing the user with information about the at least one product or service specified in the specifying step.

A program according to the present invention causes a computer to function as receiving means for receiving a request for changing a value of an attribute of a user, changing means for changing the value of the attribute in response to the request for changing the value of the attribute, specifying means for specifying at least one product or service to be recommended to the user based on at least one of the value of the attribute before the value is changed and the value of the attribute after the value is changed, and providing means for providing the user with information about the at least one product or service specified by the specifying means.

A recording medium according to the present invention stores a program causing a computer to function as receiving means for receiving a request for changing a value of an attribute of a user, changing means for changing the value of the attribute in response to the request for changing the value of the attribute, specifying means for specifying at least one product or service to be recommended to the user based on at least one of the value of the attribute before the value is changed and the value of the attribute after the value is changed, and providing means for providing the user with information about the at least one product or service specified by the specifying means.

According to the present invention, at least one product or service to be recommended to the user is specified based on at least one of the value of the attribute before the value is changed and the value of the attribute after the value is changed, the value being changed in response to a request from the user. Information on the specified product or service is then provided to the user. In this way, according to the present invention, the user is provided with information about at least one product or service corresponding to a new need due to a change in an attribute of the user by the user.

Further, in an aspect of the present invention, the specifying means specifies the at least one product or service to be recommended to the user based on at least one of the value of the attribute before the value is changed and the value of the attribute after the value is changed, and a value of another attribute of the user, the another attribute being associated with the attribute and not being changed when the attribute is changed.

Further, according to an aspect of the present invention, the receiving means receives the request for changing the value of the attribute of the user, the request being based on an operation of the user on a page in which the value of the attribute of the user is changed, and the specifying means specifies the at least one product or service to be recommended to the user based on at least one of the value of the attribute before the value is changed and the value of the attribute after the value is changed, the attribute being changeable by the user, and a value of another attribute of the user, the another attribute being associated with the attribute and not being changeable by the operation of the user on the page.

Further, according to an aspect of the present invention, the specifying means specifies the at least one product or service to be recommended to the user based on at least one of the value of the attribute before the value is changed and the value of the attribute after the value is changed, the attribute being changeable by the user, and a value of another attribute of the user, the another attribute being associated with the attribute and not being changeable by the user.

Further, according to an aspect of the present invention, the specifying means specifies, when the value of the attribute of the user is changed or during a predetermined period of time before the value of the attribute of the user is changed, different at least one product or service depending on whether or not a value of another attribute of the user is changed, the another attribute being associated with the attribute.

Further, according to an aspect of the present invention, the information providing system further includes a restriction means for restricting the providing means from providing the user with information about the at least one product or service specified by the specifying means in a case where a value of another attribute of the user is changed at the time when the value of the attribute of the user is changed, the another attribute being associated with the attribute, or in a case where a value of another attribute of the user is changed during a predetermined period of time before the value of the attribute of the user is changed, the another attribute being associated with the attribute.

### Brief Description of Drawings

[FIG. 1] A diagram illustrating the overall configuration of a computer network according to an embodiment of the present invention.
[FIG. 2] A functional block diagram illustrating an example of functions implemented in a virtual mall system according to an embodiment of the present invention.
[FIG. 3] A diagram illustrating an example of account data.
[FIG. 4] A diagram illustrating an example of recommendation target specifying rule data.
[FIG. 5] A diagram illustrating an example of rank management data.
[FIG. 6] A diagram illustrating an example of a user attribute display page.
[FIG. 7] A diagram illustrating an example of a user attribute change page.
[FIG. 8] A diagram illustrating an example of a user attribute change confirmation page.
[FIG. 9] A diagram illustrating an example of a user attribute display page.
[FIG. 10] A flow diagram illustrating an example of the processing executed in the virtual mall system according to an embodiment of the present invention.
[FIG. 11] A diagram illustrating an example of recommendation target specifying rule data.
[FIG. 12] A diagram illustrating an example of a change attribute selection page.
[FIG. 13] A diagram illustrating an example of a user attribute change page.
[FIG. 14] A diagram illustrating an example of a user attribute change confirmation page.
[FIG. 15] A diagram illustrating an example of restriction rule data.

### Description of Embodiments

An embodiment of the present invention will be described below in detail with reference to the accompanying drawings.

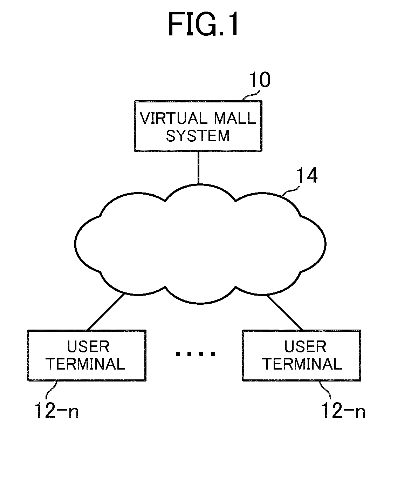

FIG. 1 is a diagram illustrating the overall configuration of a computer network according to an embodiment of the present invention. As shown in FIG. 1, a computer network 14, such as the Internet, is connected to a virtual mall system 10 and user terminals 12 (12-1-12-n), each of which is constituted mainly of a computer. The virtual mall system 10 and the user terminal 12 can communicate with each other.

The virtual mall system 10 is a computer system that functions as, for example, a portal of the virtual mall. The virtual mall system 10 executes processing based on a processing request received from the user terminal 12. In addition, in this embodiment, the virtual mall system 10 also functions as an information providing system for providing a user with information about a product or a service corresponding to a new need due to a change in personal information of the user.

The virtual mall system 10 includes, for example, a control unit, which is a program control device such as a CPU that operates according to a program installed in the virtual mall system 10, a storage unit, which is a storage element such as a ROM or a RAM, or a hard disk, and a communication unit, which is a communication interface such as a network interface. These units are connected to one another via a bus. The storage unit of the virtual mall system 10 stores a program executed by the control unit of the virtual mall system 10. The storage unit of the virtual mall system 10 also operates as a work memory of the virtual mall system 10.

The user terminal 12 is a computer that a user operates to purchase a product or a service through the virtual mall system 10. The user terminal 12 is, for example, a personal computer, a mobile phone, or a smartphone. The user terminal 12 includes, for example, a control unit such as a CPU, a storage unit, which is a storage element such as a ROM or a RAM, or a hard disk drive, an output unit such as a display, an input unit such as a mouse, a keyboard, a touchpad, and a button, and a communication unit such as a network interface. In this embodiment, the user terminal 12 is pre-installed with a web browser and an e-mail client, and application programs of these are executed. The user terminal 12 is provided with services from the virtual mall system 10 through the web browser, and receives an e-mail from the virtual mall system 10 through the e-mail client.

In this embodiment, for example, when a user whose account is registered in the virtual mall system 10 changes the user's attribute, such as the user's personal information, the virtual mall system 10 provides the user with information relating to a product or a service recommendable for the user. In the following, information provided to the user in this way is referred to as recommendation target related information. Examples of the recommendation target related information include an advertisement such as a banner image relating to a product or a service to be recommended to the user, or a link to a page explaining the product or the service to be recommended to the user. The recommendation target related information is specified based on at least one of the value of the attribute of a user, who is provided with the recommendation target related information, before the value is changed, and the value of the attribute of the user after the value is changed.

In this embodiment, the user terminal 12 accesses the virtual mall system 10 through the web browser and enters a user ID and a password. Subsequently, the user terminal 12 accesses a predetermined URL to display a page corresponding to the predetermined URL on a display of the user terminal 12. In this regard, after the user ID and the password are entered, the virtual mall system 10 can specify the user ID of the user who uses the user terminal 12 by referring to, for example, session information.

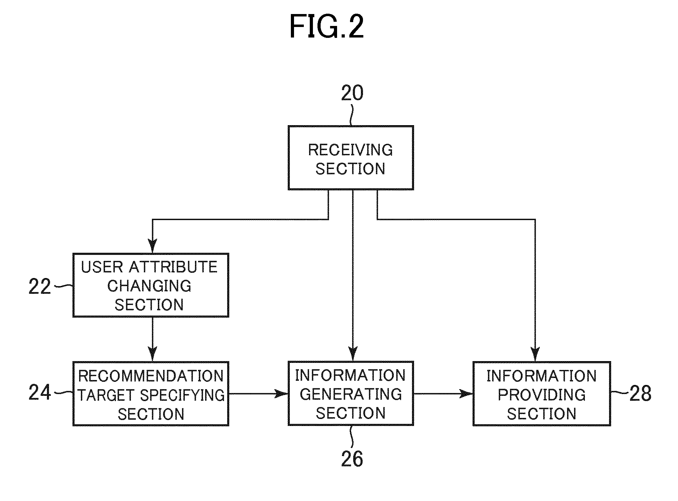

FIG. 2 is a functional block diagram illustrating an example of functions that are executed in the virtual mall system 10 according to this embodiment and relate to providing a user with recommendation target related information. The virtual mall system 10 according to this embodiment may include other functions than the functions shown in FIG. 2.

The virtual mall system 10 according to this embodiment functionally includes, for example, a receiving section 20, a user attribute changing section 22, a recommendation target specifying section 24, an information generating section 26, and an information providing section 28. These sections are implemented by a program installed in the virtual mall system 10, which is a computer. The program is executed in the control unit of the virtual mall system 10. In this regard, the program is provided to the virtual mall system 10 through, for example, a computer-readable storage medium such as a CD-ROM and a DVD-ROM, or a communication network such as the Internet.

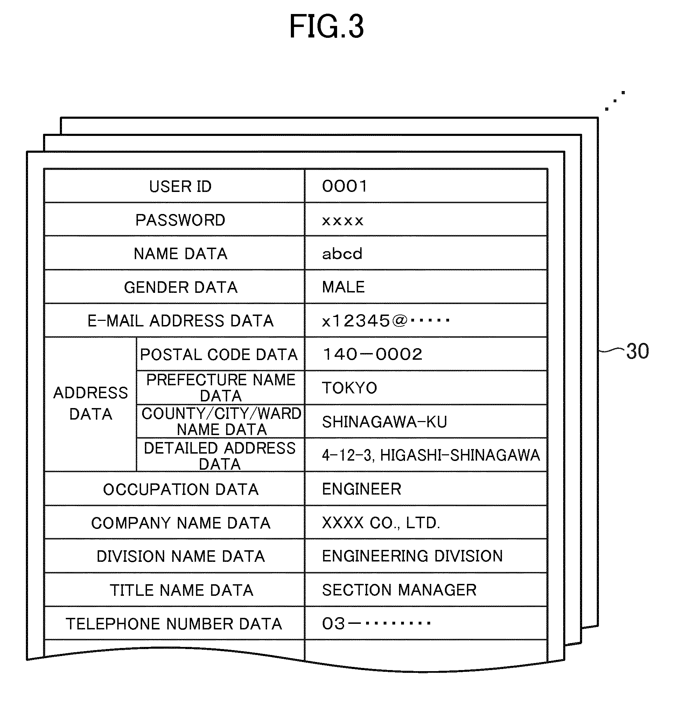

In this embodiment, account data 30 illustrated in FIG. 3 is stored in the storage unit of the virtual mall system 10 beforehand. The account data 30 is data for managing accounts of the users who use the virtual mall system 10. In this embodiment, the account data 30 includes some elements. Each element is associated with a value of a user's attribute, for example, user's personal information. The account data 30 includes, for example, a user ID as a user identifier, a password for identifying the user, name data indicative of the user's name, gender data indicative of the user's gender, e-mail address data indicative of the user's e-mail address, address data indicative of the user's address, occupation data indicative of the user's occupation, company name data indicative of the user's company, division name data indicative of a division in the user's company, title name data indicative of the user's title, and telephone number data indicative of the user's telephone number.

In this embodiment, the address data includes postal code data indicative of a postal code of the user's address, prefecture name data indicative of a prefecture name included in the user' s address, county/city/ward name data indicative of a county, city, or ward name included in the user's address, detailed address data indicative of a name of a place included in an area represented by the county/city/ward name data (e.g., area's name, block number, or apartment name).

The account data 30 is generated by the virtual mall system 10 in response to the user's operation for inputting the user's account into an account registering page (not shown) displayed on the display of the user terminal 12, and stored in the storage unit of the virtual mall system 10.

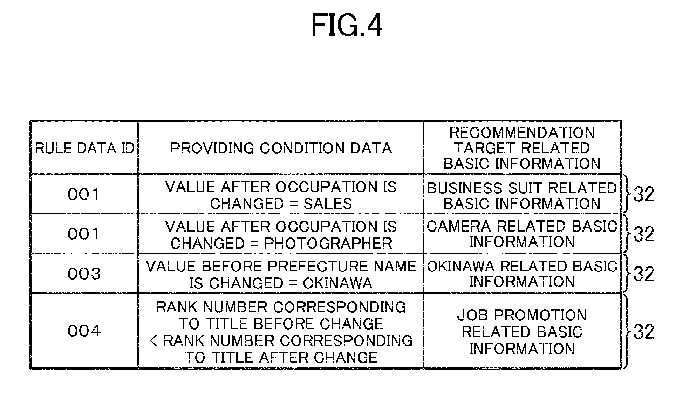

In this embodiment, recommendation target specifying rule data 32 illustrated in FIG. 4 is stored in the storage unit of the virtual mall system 10 beforehand. In this embodiment, the recommendation target specifying rule data 32 is data indicating rules for specifying a product or a service to be recommended to a user when a value of the attribute of the user is changed, i.e., one or more values of attributes included in the account data 30 are changed. The product or the service is specified based on the change in the value of the attribute.

In this embodiment, the recommendation target specifying rule data 32 includes, for example, a rule data ID, which is an identifier of the recommendation target specifying rule data 32, providing condition data indicative of conditions for providing recommendation target related information, and recommendation target related basic information, which is a basis of generating recommendation target related information. In this embodiment, the recommendation target related basic information includes, for example, a combination of a banner image of a product or a service to be recommended and a URL of a page explaining the product or the service to be recommended to the user.

As shown in FIG. 4, the recommendation target specifying rule data 32 that has a value "001" as a rule data ID includes providing condition data set with a value "value after occupation is changed = sales." The recommendation target specifying rule data 32 that has a value "001" as a rule data ID includes recommendation target related basic information set with business suit related basic information, which is information for a basis of generating recommendation target related information about business suits. The business suit related basic information includes, for example, a banner image, which is an advertisement image relating to suits, and a URL of a page displaying suits in the virtual mall system 10 (e.g., top page under a category "suit").

The recommendation target specifying rule data 32 that has a value "002" as a rule data ID includes providing condition data set with a value "value after occupation is changed = photographer. " The recommendation target specifying rule data 32 that has a value "002" as a rule data ID includes recommendation target related basic information set with camera related basic information, which is information for a basis of generating recommendation target related information about cameras. The camera related basic information includes, for example, a banner image, which is an advertisement image relating to cameras, and a URL of a page presenting cameras in the virtual mall system 10 (e.g., top page under a category "camera").

The recommendation target specifying rule data 32 that has a value "003" as a rule data ID includes providing condition data set with a value "value before prefecture name is changed = Okinawa. " The recommendation target specifying rule data 32 that has a value "003" as a rule data ID includes recommendation target related basic information set with Okinawa related basic information, which is information for a basis of generating recommendation target related information about Okinawa. The Okinawa related basic information include, for example, a banner image, which is an advertisement image relating to local products of Okinawa, and a URL of a page presenting local products of Okinawa in the virtual mall system 10 (e.g., top page under a category "local products of Okinawa").

The recommendation target specifying rule data 32 that has a value "004" as a rule data ID includes providing condition data set with a value "rank number corresponding to title before change < rank number corresponding to title after change." The recommendation target specifying rule data 32 that has a value "004" as a rule data ID includes recommendation target related basic information set with job promotion related basic information, which is information for a basis of generating recommendation target related information about job promotion. The job promotion related basic information includes, for example, a banner image, which is an advertisement image relating to celebration of job promotion, and a URL of a page presenting products or services relating to celebration of job promotion in the virtual mall system 10 (e.g., top page under a category "celebration of job promotion").

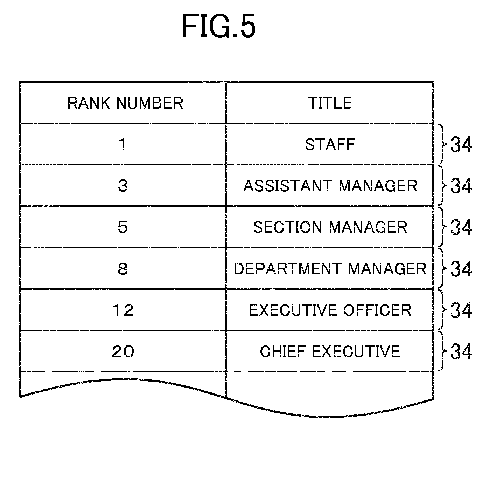

In this embodiment, rank management data 34, which is data associating rank numbers with titles as illustrated in FIG. 5, is stored beforehand. In the rank management data 34 shown in FIG. 5, a value of a rank number associated with a title is greater when a level of the title is higher.

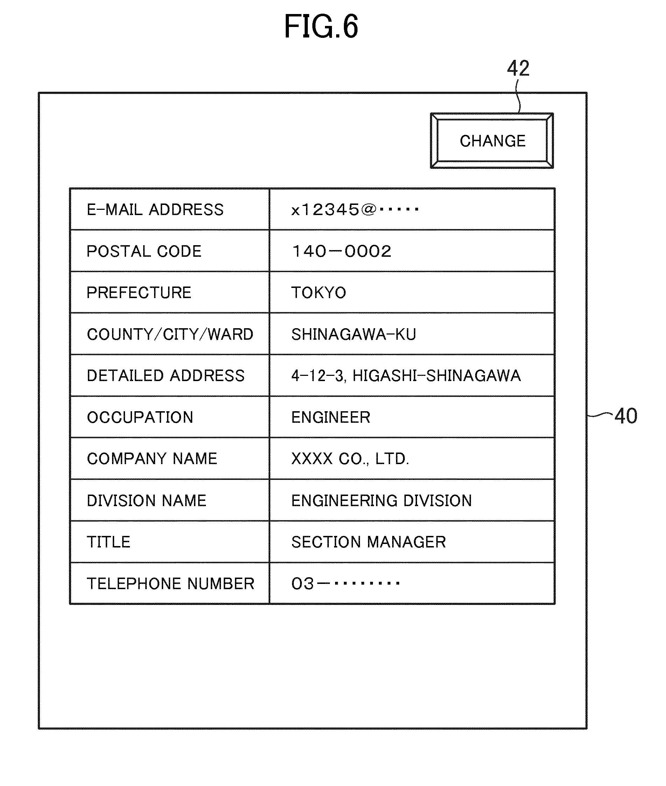

FIG. 6 is a diagram illustrating an example of a user attribute display page 40 displayed on the user terminal 12. In this embodiment, the receiving section 20 of the virtual mall system 10 receives a request for outputting the user attribute display page 40 from the user terminal 12 of a user who has logged in (hereinafter "user A"). Subsequently, the information generating section 26 of the virtual mall system 10 generates data indicative of the user attribute display page 40 shown in FIG. 6 based on the account data 30 including a user ID (e.g., "001") of the user A. The information providing section 28 of the virtual mall system 10 then sends the data to the user terminal 12. Upon receiving the data from the virtual mall system 10, the user terminal 12 displays the user attribute display page 40 on the display through the web browser.

As shown in FIG. 6, the user attribute display page 40 has a list of a value of e-mail address data, a value of postal code data, a value of prefecture name data, a value of county/city/ward name data, a value of detailed address data, a value of occupation data, a value of company name data, a value of division name data, a value of title name data, and a value of telephone number data, each of which is included in the account data 30 of the user A. A change button 42 is arranged on the upper right portion of the user attribute display page 40 shown in FIG. 6.

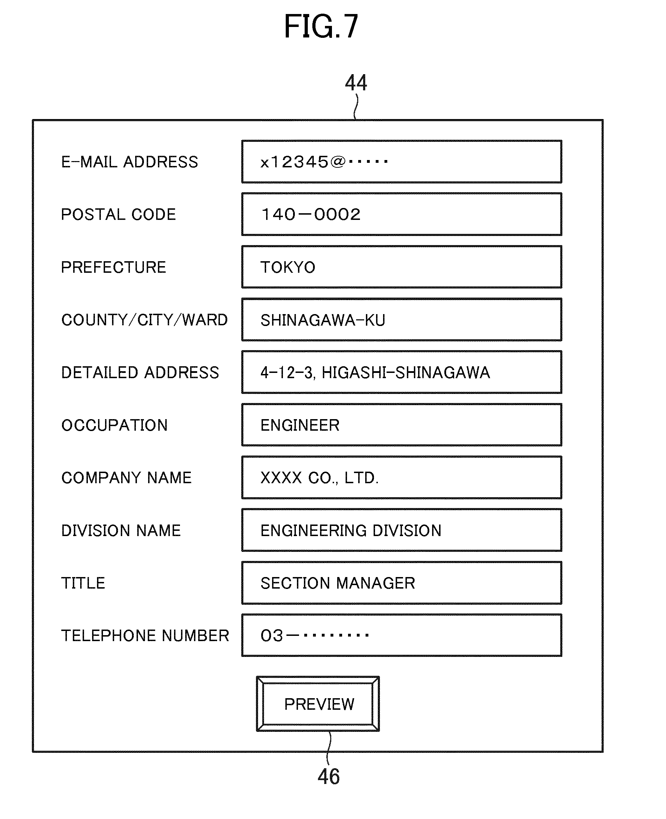

When the user A clicks the change button 42 arranged on the user attribute display page 40 with a mouse, the user terminal 12 sends a request for outputting a user attribute change page 44 shown in FIG. 7 to the virtual mall system 10. The receiving section 20 of the virtual mall system 10 then receives the request. Subsequently, the information generating section 26 of the virtual mall system 10 generates data indicating the user attribute change page 44. The information providing section 28 of the virtual mall system 10 then sends the data to the user terminal 12. Upon receiving the data from the virtual mall system 10, the user terminal 12 displays the user attribute change page 44 on the display through the web browser.

As shown in FIG. 7, the user attribute change page 44 has forms respectively corresponding to e-mail address, postal code, prefecture, county/city/ward, detailed address, occupation, company name, division name, title, and telephone number. In this embodiment, the forms respectively have values of the current attribute associated with the forms, that is, the values of elements included in the account data 30. In this embodiment, the address data, the occupation data, the company name data, the division name data, the title name data, and the telephone number data included in the account data 30 can be changed on the user attribute change page 44. In other words, attributes like address, occupation, company name, division name, title, and telephone number are changeable on the user attribute change page 44. On the other hand, user ID, password, name data, and gender data included in the account data 30 cannot be changed in the user attribute change page 44. In other words, a user ID, a password, a name, and a gender are attributes not being changeable on the user attribute change page 44. FIG. 7 illustrates an example of the user attribute change page 44 in which the values of the attributes are not changed yet.

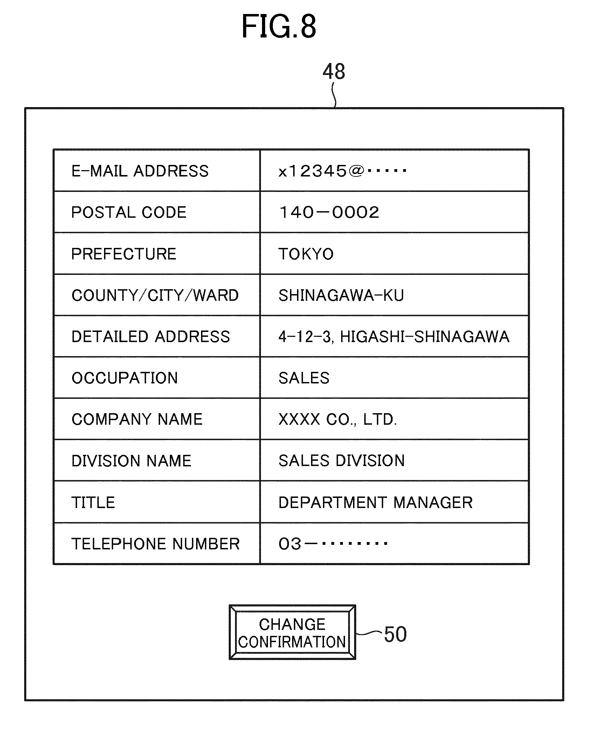

A preview button 46 is arranged on the lower part of the user attribute change page 44. The user A changes, on the user terminal 12, the value inputted in the form corresponding to the attribute that the user A wants to change, and clicks the preview button 46. Subsequently, the user terminal 12 sends a request for outputting the user attribute change confirmation page 48 shown in FIG. 8 to the virtual mall system 10. The receiving section 20 of the virtual mall system 10 receives the request. The information generating section 26 of the virtual mall system 10 generates data indicating the user attribute change confirmation page 48. The information providing section 28 of the virtual mall system 10 then sends the data to the user terminal 12. Upon receiving the data from the virtual mall system 10, the user terminal 12 displays the user attribute change confirmation page 48 on the display through the web browser. FIG. 8 illustrates an example of the user attribute change confirmation page 48, which is displayed on the user attribute change page 44 shown in FIG. 7 when the occupation, the division name, and the title are changed.

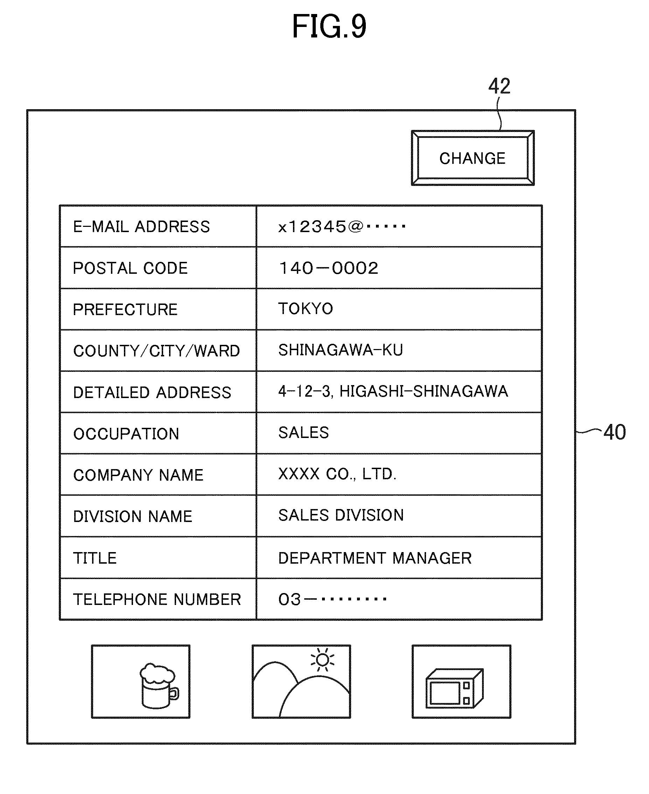

The user attribute change confirmation page 48 has a list of values inputted in the respective forms arranged on the user attribute change page 44 when the preview button 46 on the user attribute change page 44 is clicked. A change confirmation button 50 is arranged on the lower part of the user attribute change page 44. When the user A clicks the change confirmation button 50 on the user terminal 12, the user attribute display page 40 as shown in FIG. 9 is displayed on the display of the user terminal 12 through the web browser.

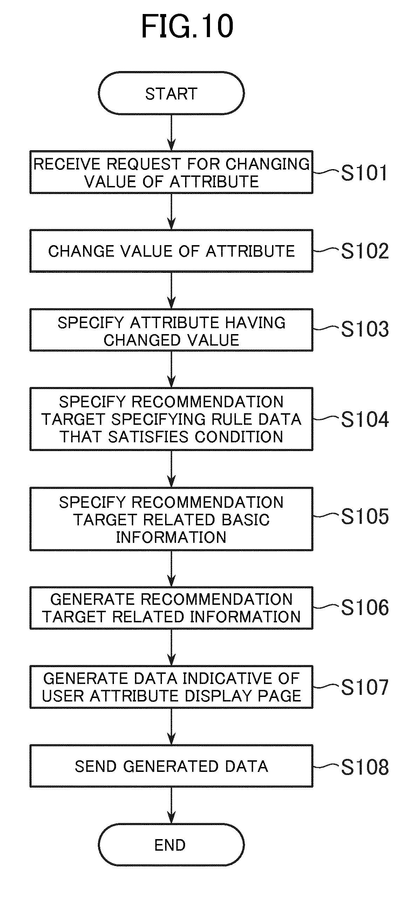

In the following, referring to a flow chart shown in FIG. 10, processing performed in the virtual mall system 10 according to this embodiment is explained. The processing is performed from the time when the change confirmation button 50 on the user attribute change confirmation page 48 shown in FIG. 8 is clicked to the time when the user attribute display page 40 shown in FIG. 9 is displayed on the display of the user terminal 12.

When the user A clicks the change confirmation button 50 on the user terminal 12, the user terminal 12 sends a request for changing a value of the user A's attribute to the virtual mall system 10. The receiving section 20 of the virtual mall system 10 then receives the change request (S101). In this embodiment, the change request is associated with values of the respective attributes on the user attribute display page 40.

The user attribute changing section 22 of the virtual mall system 10 determines, for each of the elements other than the user ID and the password included in the account data 30 that includes the user ID (e.g., "001") of the user A, whether or not the value set in the account data 30 matches the value associated with the change request received in S101. If not matched, the user attribute changing section 22 changes the value of the attribute, which is set in the account data 30 that includes the user A's user ID, to the value associated with the change request received in S101 (S102). The recommendation target specifying section 24 then specifies the attribute in which the value is changed in S102 (S103). Subsequently, the recommendation target specifying section 24 specifies, among from the recommendation target specifying rule data 32 stored in the storage unit of the virtual mall system 10, the value of the attribute specified in S103 that satisfies the condition indicated by the providing condition data included in the recommendation target specifying rule data 32 (S104). As shown in FIG. 4, the providing condition data included in the recommendation target specifying rule data 32 indicates conditions regarding at least one of the value of the attribute specified in S103 before the value is changed and the value of the attribute specified in S103 after the value is changed.

The recommendation target specifying section 24 specifies recommendation target related basic information included in the recommendation target specifying rule data 32 specified in S104 as data for a basis of generating recommendation target related information to be provided to the user A (S105).

For example, in the processing shown in S103, suppose that an occupation is specified as the attribute that has been changed. At this time, if a value of occupation data included in the account data 30 is "sales" after the value is changed, this status satisfies the condition that "value after occupation is changed = sales", where the condition is indicated as a value of the providing condition data included in the recommendation target specifying rule data 32 in which a value of the rule data ID is "001." " As such, the recommendation target specifying section 24 specifies the recommendation target specifying rule data 32 in which a value of the rule data ID is "001" in S104. The recommendation target specifying section 24 then specifies, in the processing shown in S105, business suit related basic information, which is recommendation target related basic information included in the recommendation target specifying rule data 32 having a value "001" of the rule data ID, as a basis of generating recommendation target related information to be provided to the user A.

If a value of occupation data included in the account data 30 is "photographer" after the value is changed, this status satisfies the condition that "value after occupation is changed = photographer", where the condition is indicated as a value of the providing condition data included in the recommendation target specifying rule data 32 in which a value of the rule data ID is "002." As such, the recommendation target specifying section 24 specifies the recommendation target specifying rule data 32 in which a value of the rule data ID is "002" in S104. The recommendation target specifying section 24 then specifies, in the processing shown in S105, camera related basic information, which is recommendation target related basic information included in the recommendation target specifying rule data 32 having a value "002" of the rule data ID, as a basis of generating recommendation target related information to be provided to the user A.

For example, in the processing shown in S103, suppose that a prefecture name is specified as the attribute that has been changed. At this time, if a value of prefecture name data included in the account data 30 is "Okinawa" before the value is changed, this status satisfies the condition that "value before prefecture name is changed = Okinawa", where the condition is indicated as a value of the providing condition data included in the recommendation target specifying rule data 32 in which a value of the rule data ID is "003." As such, the recommendation target specifying section 24 specifies the recommendation target specifying rule data 32 in which a value of the rule data ID is "003" in S104. The recommendation target specifying section 24 then specifies, in the processing shown in S105, Okinawa related basic information, which is recommendation target related basic information included in the recommendation target specifying rule data 32 having a value "003" of the rule data ID, as a basis of generating recommendation target related information to be provided to the user A.

For example, in S103, suppose that a title is specified as the attribute that has been changed. At this time, if a value of title name data included in the account data 30 is "section manager" before the value is changed, and is "department manager" after the value is changed, this status satisfies the condition that "rank number corresponding to title before change < rank number corresponding to title after change", where the condition is indicated as a value of the providing condition data included in the recommendation target specifying rule data 32 in which a value of the rule data ID is "004", since the title "section manager" is associated with the rank number "5", and the title "department manager" is associated with the rank number "8" in the rank management data 34 shown in FIG. 5. As such, the recommendation target specifying section 24 specifies recommendation target specifying rule data 32, in which a value of the rule data ID is "004", in S104. The recommendation target specifying section 24 then specifies, in the processing shown in S105, job promotion related basic information, which is recommendation target related basic information included in the recommendation target specifying rule data 32 having a value "004" of the rule data ID, as a basis of generating recommendation target related information to be provided to the user A.

In the processing shown in S104, in a case where there are a plurality of pieces of recommendation target specifying rule data 32 that satisfy the condition indicated by the providing condition data including at least one of the value of the attribute specified in S103 before the value is changed and the value of the attribute specified in S103 after the value is changed, the recommendation target specifying section 24 may specify the plurality of pieces of the recommendation target specifying rule data 32. In the processing shown in S105, the recommendation target specifying section 24 may specify recommendation target related basic information included in each of the plurality of pieces of the recommendation target specifying rule data 32 as information for a basis of generating recommendation target related information to be provided to the user A.

For example, in S103, suppose that an occupation and a title are specified as the attributes that have been changed. At this time, if a value of the occupation data included in the account data 30 is "sales" after the value is changed, a value of the title name data included in the account data 30 is "section manager" before the value is changed, and a value of the title name data included in the account data 30 is "department manager" after the value is changed, this status satisfies the condition indicated as a value of the providing condition data included in the recommendation target specifying rule data 32 where a value of the rule data ID is "001", and the condition indicated as a value of the providing condition data included in the recommendation target specifying rule data 32 where a value of the rule data ID is "004." As such, the recommendation target specifying section 24 specifies the recommendation target related basic information included in the recommendation target specifying rule data 32 where a value of the rule data ID is "001" and the recommendation target related basic information included in the recommendation target specifying rule data 32 where a value of the rule data ID is "004" as information for a basis of generating recommendation target related information to be provided to the user A.

Subsequently, after the processing indicated in S105 is completed, the information generating section 26 generates recommendation target related information to be provided to the user A based on the recommendation target related basic information specified in S105 (S106). For example, if the business suit related basic information is specified in S105, the information generating section 26 generates, as recommendation target related information, a banner image that is included in the business suit related basic information and associated with a URL included in the business suit related basic information as a link. Further, for example, if the camera related basic information is specified in S105, the information generating section 26 generates, as recommendation target related information, a banner image that is included in the camera related basic information and associated with a URL included in the camera related basic information as a link. Further, for example, if Okinawa related basic information is specified in S105, the information generating section 26 generates, as recommendation target related information, a banner image that is included in the Okinawa related basic information and associated with a URL included in the Okinawa related basic information as a link. Further, for example, if job promotion related basic information is specified in S105, the information generating section 26 generates, as recommendation target related information, a banner image that is included the job promotion related basic information and associated with a URL included in the job promotion related basic information as a link.

In a case where a plurality of pieces of recommendation target related basic information are specified in S105, a plurality of pieces of recommendation target related information are generated in S106.

The information generating section 26 generates data indicative of the user attribute display page 40 that includes a list of the changed values of attributes of the user A, such as values of e-mail address data, postal code data, prefecture name data, county/city/ward name data, detailed address data, occupation data, company name data, division name data, title name data, and telephone number data, and displays the recommendation target related information generated in S106 in the bottom portion (S107).

FIG. 9 shows the user attribute display page 40 in which three banner images are placed at the bottom as the recommendation target related information. Each of the banner images is associated with a corresponding URL as a link.

The information providing section 28 sends the data generated in S107 to the user terminal 12 of the user A (S108). Upon receiving the data, the user terminal 12 of the user A displays the user attribute display page 40, which is indicated by the data, on the display through the web browser.

In this manner, the user attribute display page 40 that shows the recommendation target related information generated in S106 is displayed on the display of the user terminal 12 of the user A.

When the user A clicks the banner image placed on the user attribute display page 40 as the recommendation target related information on the user terminal 12, the user terminal 12 sends a request for outputting a page identified by the URL associated with the clicked banner image to the virtual mall system 10. The receiving section 20 of the virtual mall system 10 then receives the request. Subsequently, the information providing section 28 of the virtual mall system 10 sends the data indicative of a page identified by the URL associated with the clicked banner image to the user terminal 12. Upon receiving the data from the virtual mall system 10, the user terminal 12 displays the page, which is indicated by the received data, on the display through the web browser.

In this embodiment, the recommendation target specifying section 24 specifies a product or a service to be recommended to a user based on at least one of the value of the attribute of the user before the value is changed and the value of the attribute of the user after the value is changed. Specifically, the recommendation target specifying section 24 specifies recommendation target related basic information to be a basis of generating recommendation target related information, which is information relating to a product or a service to be recommended to the user, based on, for example, at least one of the value of the attribute of the user before the value is changed and the value of the attribute of the user after the value is changed. The information providing section 28 then provides the user with information relating to the product or the service specified by the recommendation target specifying section 24. Specifically, the information providing section 28 provides the user, for example, with the user attribute display page 40 that includes the recommendation target related information, which is generated based on the recommendation target related basic information specified by the recommendation target specifying section 24. In this way, the virtual mall system 10 of this embodiment can provide a user with information about a product or a service corresponding to a new need due to a change in an attribute of the user by the user.

The recommendation target specifying rule data 32 according to this embodiment may be modified and refined in various ways.

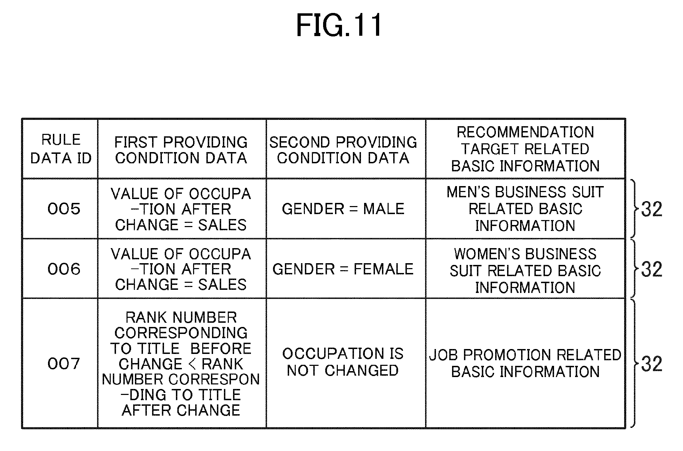

FIG. 11 illustrates another example of the recommendation target specifying rule data 32. The recommendation target specifying rule data 32 shown in FIG. 11 includes, for example, a rule data ID as an identifier of the recommendation target specifying rule data 32, first providing condition data indicative of a first condition to provide recommendation target related information, second providing condition data indicative of a second condition to provide recommendation target related information, and recommendation target related basic information as a basis of generating recommendation target related information.

In FIG. 11, the first providing condition data, which is included in the recommendation target specifying rule data 32 where a value of the rule data ID is "005", includes a value "value of occupation after change = sales." The second providing condition data, which is included in the recommendation target specifying rule data 32 where a value of the rule data ID is "005", includes a value "gender = male." The recommendation target related basic information, which is included in the recommendation target specifying rule data 32 where a value of the rule data ID is "005", includes men's business suit related basic information, which is information for a basis of generating recommendation target related information relating to men's suits. The men's business suit related basic information includes, for example, a banner image, which is an advertisement image relating to men's suits, and a URL of a page presenting men's suits in the virtual mall system 10 (e.g., top page under a category "men's suit").

In FIG. 11, the first providing condition data, which is included in the recommendation target specifying rule data 32 where a value of the rule data ID is "006", includes a value "value of occupation after change = sales." The second providing condition data, which is included in the recommendation target specifying rule data 32 where a value of the rule data ID is "005", includes a value "gender = female." The recommendation target related basic information, which is included in the recommendation target specifying rule data 32 where a value of the rule data ID is "006", includes women's business suit related basic information, which is information for a basis of generating recommendation target related information relating to women's suits. The women's business suit related basic information includes, for example, a banner image, which is an advertisement image relating to women's suits, and a URL of a page presenting women's suits in the virtual mall system 10 (e.g., top page under a category "women's suit").

In FIG. 11, the first providing condition data, which is included in the recommendation target specifying rule data 32 where a value of the rule data ID is "007", includes a value "rank number corresponding to title before change < rank number corresponding to title after change. " The second providing condition data, which is included in the recommendation target specifying rule data 32 where a value of the rule data ID is "007", includes a value "occupation is not changed." The recommendation target related basic information, which is included in the recommendation target specifying rule data 32 where a value of the rule data ID is "007", includes job promotion related basic information, which is information for a basis of generating recommendation target related information relating to job promotion. The job promotion related basic information includes, for example, a banner image, which is an advertisement image relating to celebration of job promotion, and a URL of a page presenting celebration of job promotion in the virtual mall system 10.

In a case where the recommendation target specifying rule data 32 shown in FIG. 11 is used instead of the recommendation target specifying rule data 32 shown in FIG. 4, the recommendation target specifying section 24 specifies, in S104 mentioned above, for example, pieces of the recommendation target specifying rule data 32, which is stored in the storage unit of the virtual mall system 10, with the value of the attribute specified in S103 that satisfies the conditions indicated by the first providing condition data and the second providing condition data included in the recommendation target specifying rule data 32.

For example, in the processing shown in S103, suppose that occupation is specified as the changed attribute. At this time, if a value of the occupation data included in the account data 30 is "sales" after the value is changed, and a value of the gender data included in the account data 30 is "male", this status satisfies the condition indicated as a value of the first providing condition data and a value of the second providing condition data included in the recommendation target specifying rule data 32 where a value of the rule data ID is "005." As such, the recommendation target specifying section 24 specifies the men's business suit related basic information, which is recommendation target related basic information included in the recommendation target specifying rule data 32 where a value of the rule data ID is "005", as information for a basis of generating recommendation target related information to be provided to the user A.

In the above, if a value of the occupation data included in the account data 30 is "sales" after the value is changed and a value of the gender data included in the account data 30 is "female", this status satisfies the condition indicated as a value of the first providing condition data and a value of the second providing condition data included in the recommendation target specifying rule data 32 where a value of the rule data ID is "006." As such, the recommendation target specifying section 24 specifies the women's business suit related basic information, which is recommendation target related basic information included in the recommendation target specifying rule data 32 where a value of the rule data ID is "006", as information for a basis of generating recommendation target related information to be provided to the user A.

In this way, the recommendation target specifying section 24 may specify a product or a service to be recommended to a user based on at least one of a value of the user's attribute P1 before the value is changed and a value of the user's attribute P1 after the value is changed, and a value of the user's attribute Q1, which is associated with the attribute P1 in the recommendation target specifying rule data 32 and is not changed when the value of the attribute P1 is changed. Specifically, for example, the recommendation target specifying section 24 may specify a product or a service to be recommended to a user based on at least one of a value of the user's occupation before the value is changed and a value of the user's occupation after the value is changed, and a value of the user's gender that is not changed at the same time when the value of the user's occupation is changed.

The attribute Q1 mentioned above may be an attribute that is not changeable (e.g., gender) or an attribute that is changeable by a user's operation on the user attribute change page 44. In addition, the attribute Q1 maybe an attribute that is not changeable by the user on the attribute change page 44, and also not changeable by the user after the account data 30 is registered.

For example, in the processing shown in S103, suppose that the title is specified as the changed attribute, and the occupation is not specified as the changed attribute. At this time, if a value of the title name data included in the account data 30 is "section manager" before the value is changed, and a value of the title name data included in the account data 30 is "department manager" after the value is changed, this status satisfies the condition indicated as a value of the first providing condition data and a value of the second providing condition data included in the recommendation target specifying rule data 32 where a value of the rule data ID is "007." As such, the recommendation target specifying section 24 specifies the job promotion related basic information, which is recommendation target related basic information included in the recommendation target specifying rule data 32 where a value of the rule data ID is "007", as information for a basis of generating recommendation target related information to be provided to the user A.

On the other hand, for example, in S103, suppose that the title and the occupation are specified as the changed attributes. In addition, suppose that a value of the occupation data included in the account data 30 is "sales" before the value is changed, and a value of the gender data included in the account data 30 is "male. " This status satisfies the condition indicated as a value of the first providing condition data included in the recommendation target specifying rule data 32 where a value of the rule data ID is "007", but does not satisfy the condition indicated as a value of the second providing condition data. As such, in this case, the recommendation target specifying section 24 does not specify the job promotion related basic information, which is recommendation target related basic information included in the recommendation target specifying rule data 32 where a value of the rule data ID is "007", as information for a basis of generating recommendation target related information to be provided to the user A. In this regard, however, the recommendation target specifying section 24 specifies the men's business suit related basic information, which is recommendation target related basic information included in the recommendation target specifying rule data 32 where a value of the rule data ID is "005", as information for a basis of generating recommendation target related information to be provided to the user A.

In this way, when the value of the user's attribute P2 is changed, the recommendation target specifying section 24 may specify different pieces of information depending on whether or not the value of the user's attribute Q2, which is associated with the attribute P2 in the recommendation target specifying rule data 32, is changed.

The present invention is not to be limited to the above described embodiment.

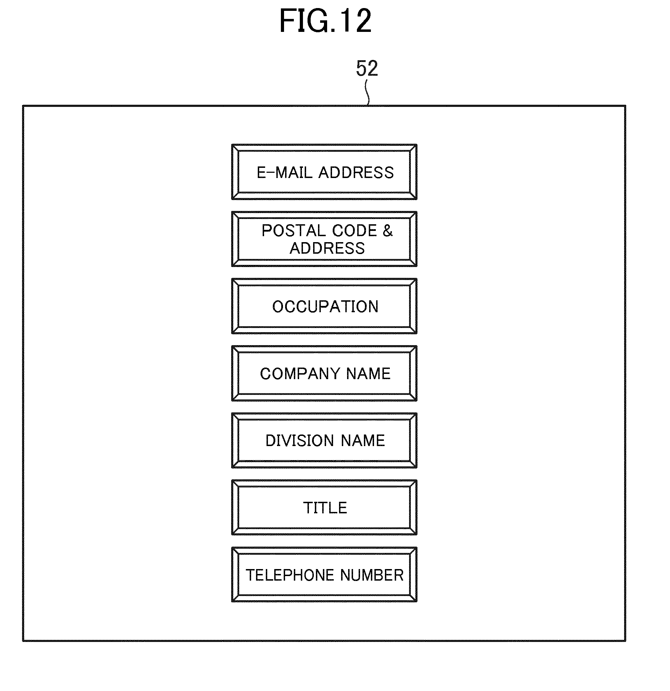

For example, when the user A clicks the change button 42 arranged on the user attribute display page 40 on the user terminal 12 using a mouse, a change attribute selection page 52 shown in FIG. 12 may be displayed on the display of the user terminal 12. The change attribute selection page 52 illustrated in FIG. 12 has, for example, some buttons each corresponding to one or more attributes.

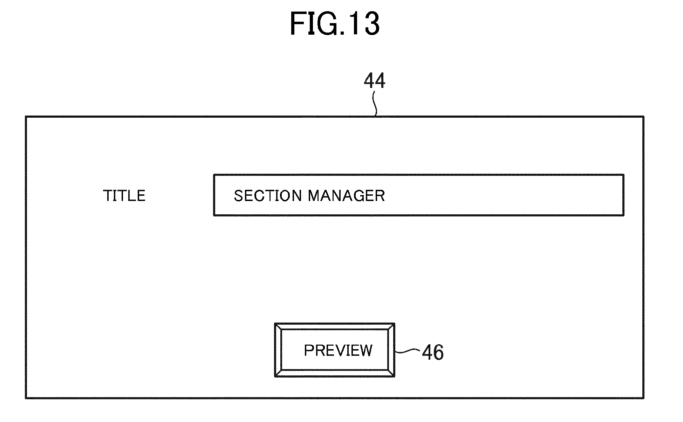

Here, when the user A clicks, on the user terminal 12, the button associated with the changed attribute, the page displayed on the display of the user terminal 12 may be updated to the user attribute change page 44 associated with the clicked button as illustrated in FIG. 13. FIG. 13 illustrates, for example, the user attribute change page 44 displayed when the button associated with the attribute "title" is clicked.

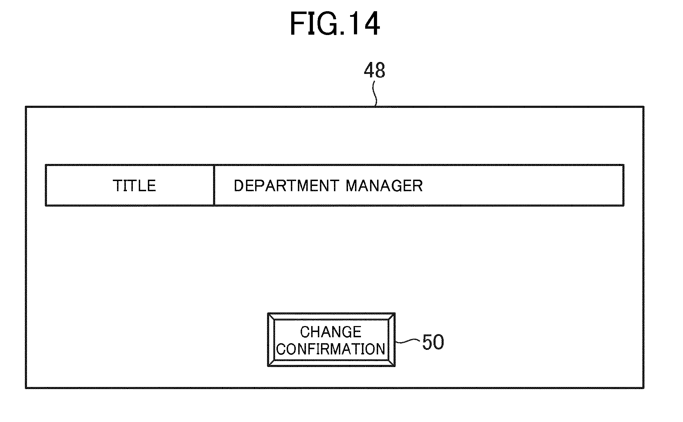

When the user A changes the value already entered in the form on the user terminal 12 and then clicks the preview button 46, the page displayed on the display of the user terminal 12 may be updated to the user attribute change confirmation page 48 illustrated in FIG. 14, which has a list of values that are already entered in the forms included in the user attribute change page 44 at the time the preview button 46 is clicked. As illustrated in FIG. 14, the change confirmation button 50 is placed at the bottom of the user attribute change confirmation page 48.

Here, when the user A clicks the change confirmation button 50 on the user terminal 12, the page displayed on the display of the user terminal 12 may be updated to the user attribute display page 40. At this time, processing similar to the processing mentioned above in S101-S108 is executed in the virtual mall system 10. For example, in S102 mentioned above, the user attribute changing section 22 may change the value of the attribute included in the account data 30, and cause the storage unit of the virtual mall system 10 to store attribute change log data that includes a name of the attribute to be changed, the value of the attribute before the value is changed, the value of the attribute after the value is changed, and data indicative of a timing to change (e.g., date and time of change).

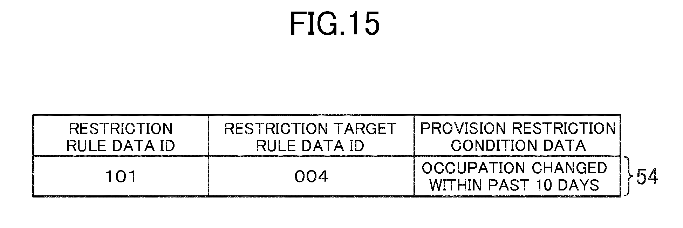

In addition, the storage unit of the virtual mall system 10 may previously store restriction rule data 54 used for restricting the recommendation target related information as illustrated in FIG. 15 from being provided. The restriction rule data 54 includes, for example, a restriction rule data ID, which is an identifier of the restriction rule data 54, a restriction target rule data ID, which is a rule data ID of the recommendation target specifying rule data 32 that is a restriction target of the recommendation target related information, and provision restriction condition data, which indicates conditions for restricting the provision of the recommendation target related information. FIG. 15 illustrates an example of the restriction rule data 54 in which the value of the restriction rule data ID is "101", the value of the restriction target rule data ID is "004", and the value of the provision restriction condition data is "occupation has been changed within the past 10 days."

The virtual mall system 10 may include a restriction section for restricting information about a product or a service specified based on the restriction rule data 54 from being provided to a user. In the following, an example of the processing executed by the restriction section for restricting the recommendation target related information from being provided based on the restriction rule data 54. The processing explained in the following is executed between, for example, the processing in S106 and the processing in S107 mentioned above.

The restriction section specifies the restriction rule data 54 that includes, as the restriction target rule data ID, the rule data ID of the recommendation target specifying rule data 32 specified in S104 mentioned above. Subsequently, the restriction section specifies provision restriction condition data included in the specified restriction rule data 54. If the condition indicated by the provision restriction condition data is satisfied, the restriction section determines to restrict the information, which is based on the recommendation target related basic information specified in S105 based on the recommendation target specifying rule data 32 specified in S104, from being provided to the user.

For example, in S104, suppose that the recommendation target specifying rule data 32 with the value of the rule data ID "004" is specified. In this case, the restriction section specifies the restriction rule data 54 that includes the restriction target rule data ID with the value "004." The restriction section then checks whether or not the occupation has been changed within the past 10 days based on the value of the provision restriction condition data "occupation has been changed within the past 10 days", which is included in the specified restriction rule data 54. Specifically, the restriction section checks, for example, whether or not the storage unit of the virtual mall system 10 stores attribute change log data, which indicates that the value of the occupation data included in the user A's account data 30 is changed within 10 days since the value of the title name included in the user A's account data 30 is changed.

If the storage unit of the virtual mall system 10 stores attribute change log data, which indicates that the value of the occupation data included in the user A's account data 30 is changed within 10 days since the value of the title name included in the user A's account data 30 is changed, the restriction section determines to restrict the information, which is based on the job promotion related basic information specified in S105 as data for a basis of generating recommendation target related information to be provided to the user A, from being provided to the user A.

The information generating section 26 does not place the information, which is determined to be restricted from being provided in a manner explained above, on the user attribute display page 40 in S107 mentioned above. The information generating section 26 generates, for example, data indicative of the user attribute display page 40 that does not place the recommendation target related information, which is generated in S106 based on the recommendation target related basic information that is determined to be restricted from being provided (e.g., banner image included in job promotion related basic information and associated with a URL included in job promotion related basic information as a link), at the bottom. In this way, information that is determined by the restriction section to be restricted from being provided to the user is restricted from being provided to the user.

Regarding the recommendation target related basic information that is determined to be restricted from being provided to the user, the information generating section 26 may not generate recommendation target related information based on such recommendation target related basic information.

In this way, in a case where a value of the user's attribute Q3 associated with the user's attribute P3 is changed in the restriction rule data 54 during the predetermined period before the value of the user's attribute P3 is changed, for example, the restriction section may restrict information specified by the recommendation target specifying section 24 from being provided to the user.

In a case where a value of the user's attribute Q4 associated with the user' s attribute P4 is changed when the value of the user' s attribute P4 is changed, the restriction section may restrict information specified by the recommendation target specifying section 24 from being provided to the user.

The recommendation target specifying section 24 may specify different pieces of information depending on whether or not the value of the user's attribute Q5 associated with the user's attribute P5 is changed during the predetermined period before the value of the user's attribute P5 is changed.

The recommendation target related basic information may include, for example, a character string and a URL. The information generating section 26 may generate, as recommendation target related information, the character string, which is included in the recommendation target related basic information and associated with the URL included in the recommendation target related basic information as a link. The information generating section 26 may also generate the user attribute display page 40 in which the character string generated as mentioned above and associated with the URL is arranged.

The method of providing information by the information providing section 28 is not limited to using a web page. For example, the information providing section 28 may send an e-mail that includes the recommendation target related information as a body to the e-mail address indicated by the e-mail address data included in the account data 30 of the user A.

The virtual mall system 10 may be constructed by a single housing or multiple housings. The specific numerical values and character strings mentioned above and the specific numerical values and character strings included in the drawings are given by way of example, and the present invention is not limited to those numerical values and character strings.

## Claims

1. An information providing system, comprising:
receiving means for receiving a request for changing a value of an attribute of a user;
changing means for changing the value of the attribute in response to the request for changing the value of the attribute;
specifying means for specifying at least one product or service to be recommended to the user based on at least one of: the value of the attribute before the value is changed, and the value of the attribute after the value is changed; and
providing means for providing the user with information about the at least one product or service specified by the specifying means.

2. The information providing system according to claim 1,
wherein the specifying means specifies the at least one product or service to be recommended to the user based on at least one of the value of the attribute before the value is changed and the value of the attribute after the value is changed, and a value of another attribute of the user, the another attribute being associated with the attribute and not being changed when the attribute is changed.

3. The information providing system according to claim 2,
wherein the receiving means receives the request for changing the value of the attribute of the user, the request being based on an operation of the user on a page in which the value of the attribute of the user is changed, and
wherein the specifying means specifies the at least one product or service to be recommended to the user based on at least one of the value of the attribute before the value is changed and the value of the attribute after the value is changed, the attribute being changeable by the user, and a value of another attribute of the user, the another attribute being associated with the attribute and not being changeable by the operation of the user on the page.

4. The information providing system according to claim 2,
wherein the specifying means specifies the at least one product or service to be recommended to the user based on at least one of the value of the attribute before the value is changed and the value of the attribute after the value is changed, the attribute being changeable by the user, and a value of another attribute of the user, the another attribute being associated with the attribute and not being changeable by the user.

5. The information providing system according to any one of claims 1 to 4,
wherein, the specifying means specifies, when the value of the attribute of the user is changed or during a predetermined period of time before the value of the attribute of the user is changed, different at least one product or service depending on whether or not a value of another attribute of the user is changed, the another attribute being associated with the attribute.

6. The information providing system according to any one of claims 1 to 5, further comprising:
a restriction means for restricting the providing means from providing the user with information about the at least one product or service specified by the specifying means in a case where a value of another attribute of the user is changed at the time when the value of the attribute of the user is changed, the another attribute being associated with the attribute, or in a case where a value of another attribute of the user is changed during a predetermined period of time before the value of the attribute of the user is changed, the another attribute being associated with the attribute.

7. An information providing method comprising the steps of:
receiving a request for changing a value of an attribute of a user;
changing the value of the attribute in response to the request for changing the value of the attribute;
specifying at least one product or service to be recommended to the user based on at least one of the value of the attribute before the value is changed and the value of the attribute after the value is changed; and
providing the user with information about the at least one product or service specified in the specifying step.

8. A program for causing a computer to function as:
receiving means for receiving a request for changing a value of an attribute of a user;
changing means for changing the value of the attribute in response to the request for changing the value of the attribute;
specifying means for specifying at least one product or service to be recommended to the user based on at least one of the value of the attribute before the value is changed and the value of the attribute after the value is changed; and
providing means for providing the user with information about the at least one product or service specified by the specifying means.

9. A recording medium for storing a program causing a computer to function as:
receiving means for receiving a request for changing a value of an attribute of a user;
changing means for changing the value of the attribute in response to the request for changing the value of the attribute;
specifying means for specifying at least one product or service to be recommended to the user based on at least one of the value of the attribute before the value is changed and the value of the attribute after the value is changed; and
providing means for providing the user with information about the at least one product or service specified by the specifying means.
